# EUROPEAN PATENT APPLICATION

(11) **EP 4 613 419 A1**
(43) Date of publication of application: **10.09.2025**
(21) Application number: 23885843.5
(22) Date of filing: 02.11.2023
(51) Int. Cl.: B23K 35/363, B23K 35/30, C22C 19/05

(54) **MIXED POWDER FOR PASTE BRAZING MATERIALS, AND PASTE BRAZING MATERIAL USING SAME**

(30) Priority: 04.11.2022 JP 2022176837
(71) Applicant: Fukuda Metal Foil & Powder Co., Ltd., Kyoto 600-8435 (JP)
(72) Inventor: OTOBE, Katsunori, Kyoto-shi, Kyoto 607-8305 (JP)
(74) Representative: Abitz & Partner
(86) International application number: PCT/JP2023/039541
(87) International publication number: WO 2024/096089

(57) **Abstract**

Provided is a mixed powder for a paste brazing filler metal; a paste brazing filler metal produced using the mixed powder; and a method for producing the paste brazing filler metal. A paste brazing filler metal according to the present invention can be produced by mixing 8.0 to 22.0 parts by mass of an aqueous solution containing an organic solvent, etc. with 100 parts by mass of a mixed powder for a paste brazing filler metal, wherein the mass ratio of a brazing filler metal powder to a resin powder of water-soluble thickening agent is 99.88 to 97.90: 0.12 to 2.10. It is preferable that the resin powder is cellulose-based. And it is particularly preferable that the resin powder is one or two selected from methyl cellulose, carboxymethyl cellulose, hydroxyethyl cellulose, hydroxypropyl cellulose and hydroxypropylmethyl cellulose.

## Description

### TECHNICAL FIELD

This invention relates to a raw material powder for a paste brazing filler metal used for joining stainless steel, etc., and the paste brazing filler metal manufactured with the same.

### BACKGROUND ART

Conventionally, when joining stainless steel, especially when corrosion resistance is required, a brazing filler metals mainly composed of nickel, iron, or cobalt are used and joined by furnace brazing. And, to apply the brazing filler metal, methods such as amorphous foil placement brazing, or method using a paste brazing filler metal such as dispenser application, screen printing, and sprinkle printing methods are adopted. In particular, the coating method using the paste brazing filler metal is used to control the amount of the brazing filler metal applied.

This paste brazing filler metal can be obtained by kneading the brazing filler metal powder and the binder. However, it requires three processes of brazing filler metal powder production, binder production, and paste production. For example, a paste brazing filler metal shown in Patent document 1 can be mentioned.

### Prior Art Documents

### Patent Document

[Patent Document 1] Japanese Patent No. 3228849

### DISCLOSURE OF THE INVENTION

### PROBLEMS TO BE SOLVED BY THE INVENTION

For the paste brazing filler metal, hydrophobic (oil-based) and water-soluble binders are used, but water-soluble binders are preferable because they do not require a facilities of the working environment or explosion-proof specification, and they have a lower environmental impact. However, in the water-soluble binder manufacturing process, lumps called mamako (lumps where only the outer surface of the powder particles or their aggregates are hydrated to form a viscous gel layer which inhibits water penetration into the interior) are generated when the water-soluble resin that serves as the thickening agent is dissolved in aqueous solution, requiring strong agitation, prolonged agitation, or a long dispersion period before the water-soluble binder becomes stable, thus slowing the production of the paste brazing filler metal. Further, there are also problems such as unstable viscosity of the binder due to mamako generation and volatilization of water during production.

### SOLUTION TO SOLVE THE PROBLEMS

Present inventor has developed a new paste brazing filler metal that suppresses the generation of mamako and eliminates the binder manufacturing process, and a mixed powder for the paste brazing filler metal that can be used for the same.

Specifically, the mixed powder for the paste brazing filler metal of present invention includes a brazing filler metal powder and a resin powder of a water-soluble thickening agent, wherein a mass ratio of the brazing filler metal powder to the resin powder is 99.88 to 97.90: 0.12 to 2.10.

And, it is preferred that the resin powder of the thickening agent is cellulose based, and the resin powder is characterized by being one or two selected from methyl cellulose, carboxymethyl cellulose, hydroxyethyl cellulose, hydroxypropyl cellulose, and hydroxypropylmethyl cellulose.

The paste brazing filler metal of the present invention can be obtained by combining 8.0 to 26.6 parts by mass of water with 100 parts by mass of the mixed powder for the paste brazing filler metal.

Further, the paste brazing filler metal of the present invention can be obtained by combining or kneading 7.8 or less parts by mass of an organic solvent (except when a total of the organic solvent is 0 parts by mass) and 2.0 to 20.0 parts by mass of water with 100 parts by mass of the mixed powder for the paste brazing filler metal, wherein the organic solvent is 1 to 3 selected from acetone, methyl alcohol, ethyl alcohol, n-propyl alcohol, isopropyl alcohol, ethylene glycol, and glycerin. In this case, a total of the water and the organic solvent is 8.0 to 22.0 parts by mass.

Or the paste brazing filler metal of the present invention can be obtained by kneading 1.0 or less parts by mass of a water-soluble resin (except when a total of the water-soluble resin is 0 parts by mass) and water with 100 parts by mass of the mixed powder for the paste brazing filler metal, wherein the water-soluble resin is one or two selected from polyvinyl alcohol, urethane resin, acrylic resin, and vinyl acetate. And a total of the water and the water-soluble resin is 8.0 to 22.0 parts by mass.

Or the paste brazing filler metal of the present invention includes 7.8 or less parts by mass of an organic solvent (except when a total of the organic solvent is 0 parts by mass), 1.0 or less parts by mass of a water-soluble resin (except when a total of the water-soluble resin is 0 parts by mass) for 100 parts by mass of the mixed powder for the paste brazing filler metal, wherein the organic solvent is 1 to 3 selected from acetone, methyl alcohol, ethyl alcohol, n-propyl alcohol, isopropyl alcohol, ethylene glycol, and glycerin, wherein the water-soluble resin is one or two selected from polyvinyl alcohol, urethane resin, acrylic resin, and vinyl acetate, wherein a remainder is water, and wherein a total of the water, the organic solvent and the water-soluble resin is 8.0 to 22.0 parts by mass. It is also preferable that the remaining water is 2.0 to 20.0 parts by mass.

Furthermore, in the production of the paste brazing filler metal of the present invention, polyvinyl alcohol, urethane resin, acrylic resin, and vinyl acetate mentioned above should preferably be diluted with water instead of a solid form. As its aqueous solution form, for example, polyvinyl alcohol with a solid content of around 10 mass %, urethane resin with a solids content of around 30 mass %, vinyl acetate with a solid content of around 40 mass %, and other solutions with a solid content of 50 mass % or less can be used.

And since the paste brazing filler metal of the present invention is the brazing filler metal used for furnace brazing of stainless steel, the brazing filler metal powder is preferable that the main component is nickel, iron, or cobalt.

Furthermore, the brazing filler metal powder included in the mixed powder for the paste brazing filler metal of the present invention is preferably an alloy powder produced by the atomization method, and its particle size should be 250 µm or less.

In order to suppress the settling of the brazing filler metal powder in the paste brazing filler metal of this invention, the particle size of the brazing filler metal powder should preferably be equal to or less than 150 µm, and even more preferably equal to or less than 63 µm.

Next, the reasons for limiting the components and proportions of the mixed powder for the paste brazing filler metal of the present invention and the paste brazing filler metal of the present invention using it are described.

The water-soluble thickening agent in the mixed powder for the paste brazing filler metal of the present invention has the function of inhibiting precipitation (sedimentation) and separation of the brazing filler metal powder. However, if the thickening agent is less than 0.12 parts by mass in 100 parts by mass of mixed powder for the paste brazing filler metal, the effect of thickening agent is weak and the brazing filler metal powder tends to precipitate (settles down). And, if the thickening agent exceeds 2.10 parts by mass in 100 parts by mass of mixed powder for the paste brazing filler metal, the viscosity of the paste brazing filler metal becomes high, which impairs the application workability, and the amount of decomposition gas generated by the resin during the brazing process increases, which causes brazing defects. Therefore, the amount of water-soluble thickening agent was limited to a range of 0.12 to 2.10 parts by mass in 100 parts by mass of mixed powder for the paste brazing filler metal.

The water-soluble thickening agent is preferably cellulose based, which inhibits precipitation and separation of the brazing powder. However, water-soluble powdered thickening agent other than cellulose based thickening agent are also applicable.

When the mixed powder for the paste brazing filler metal of the present invention is used to make the paste brazing filler metal by adding only water, and if the amount of water is less than 8.0 parts by mass in 100 parts by mass of mixed powder for the paste brazing filler metal, the viscosity of the paste brazing filler metal becomes high and the workability of application is impaired. If the amount of water exceeds 26.6 parts by mass in 100 parts by mass of mixed powder for the paste brazing filler metal, the viscosity of the paste brazing filler metal becomes low and the brazing powder tends to precipitate, which impairs the application workability. Therefore, the amount of water was limited to a range of 8.0 to 26.6 parts by mass in 100 parts by mass of mixed powder for the paste brazing filler metal.

The addition of organic solvents acclimates the oil or fat to the stainless steel base metal even when oil or fat adheres, as well as provide antiseptic effects to the paste and can adjust the drying speed for fast or slow drying. Since the thickening agent is water-soluble, water-soluble organic solvent can be selected, and organic solvent can include one to three selected from acetone, methyl alcohol (methanol), ethyl alcohol (ethanol), n-propyl alcohol, isopropyl alcohol, ethylene glycol, and glycerin. And when an organic solvent is added to the paste, the total amount of water and organic solvent should be in the range of 8.0 to 22.0 parts by mass for 100 parts by mass of mixed powder for the paste brazing filler metal, as described above. If the amount of water added is less than 2.0 parts by mass or the total amount of organic solvents exceeds 7.8 parts by mass, the amount of water reacting with the water-soluble thickening agent becomes small, the viscosity of the paste brazing filler metal becomes unstable, and the brazing filler metal powder tends to precipitate, which impairs application workability. Therefore, the amount of water added was limited to a range of 2.0 to 20.0 parts by mass, and the total amount of organic solvents added was limited to 7.8 parts by mass or less.

Furthermore, the paste brazing filler metal of the present invention may contain one or two selected from water-soluble polyvinyl alcohol, urethane resin, acrylic resin, and vinyl acetate, to suppress the precipitation and separation of the brazing filler metal powder and to improve adhesion to the stainless steel base metal. However, if the amount of resin added to the paste exceeds 1.0 part by mass per 100 parts by mass of mixed powder for the paste brazing filler metal, the amount of decomposition gas generated in the brazing process increases, which causes brazing failure. Therefore, the amount of resin added to the paste was limited to 1.0 part by mass or less. When water-soluble resin is added to the paste, the total amount of water and water-soluble resin should be in the range of 8.0 to 22.0 parts by mass per 100 parts by mass of mixed powder for the paste brazing filler metal. And in the case of the paste brazing filler metal which contains water, organic solvent, and water-soluble resin, the total amount of water, organic solvent, and water-soluble resin should be in the range of 8.0 to 22.0 parts by mass, as described above.

### MODES FOR CARRYING OUT THE INVENTION

The mixed powder for the paste brazing filler metal of the present invention can be obtained by homogeneously mixing the brazing filler metal powder which is produced by the atomization method and which is adjusted to a predetermined particle size, and water-soluble thickening agent at a predetermined ratio. The brazing filler metals are, for example, BNi-1 to BNi-13 and BCo-1 as shown in"JIS Z 3265 Nickel Brazing" and "AWS A5.8 Specification for Filler Metals for Brazing and Braze Welding", as well as the developed materials shown in Patent No. 3354922, No. 5269888, No. 5783641, and No. 5858512. As a brazing filler metal powder of the present invention, for example, the Ni-based heat-resistant brazing powder described in Patent No. 3354922, which consists of 25-35 wt % of Cr, 4-8 wt % of P, 3-6 wt % of Si, and a total of 9-11.5 wt % P + Si, and a remainder which consists of Ni and unavoidable impurities, is preferred.

Furthermore, by adding a certain amount of a solution of water or organic solvent to the above-mentioned mixed powder for the paste brazing filler metal and kneading it using a mixer, etc., a paste brazing filler metal using the mixed powder for the paste brazing filler metal of the present invention can be obtained.

By adjusting the amount of water-soluble thickening agent in the mixed powder for the paste brazing filler metal and the amount of water or solution in the paste brazing filler metal produced with it, it is possible to obtain a suitable viscosity of the paste brazing filler metal for the desired application method. And, it can be used for dispensing, screen printing, metal masking, dipping, etc. Especially, good application workability can be obtained by adjusting the viscosity of the paste brazing filler metal to 100-1500 dPa · s.

### [Example]

Paste brazing filler metals were prepared according to the procedure described above to achieve the blend ratios shown in Table 1. After kneading, the paste was placed in a sealed container and stored for 12 hours at 25°C. And, the viscosity of the paste was then checked using the Viscotester VT-06 (using No. 2 rotor, rotor speed 62.5 rpm) manufactured by RION Corporation. Further, the paste brazing filler metal was also checked for precipitation of the brazing filler metal powder in the sealed container.

The paste viscosity was considered acceptable in the range of 100 to 1500 dPa · s for ease of application, and no precipitation of the brazing filler metal powder after 12 hours of paste preparation was considered acceptable.

Table 1 shows the mixing ratios, paste viscosity, and the state of precipitation of the brazing filler metal powder in the examples and comparative examples. For the brazing filler metal powder, a Ni-29 Cr-6 P-4 Si alloy powder described in Patent No. 3354922 was used.

**[Table 1]**

| | Composition and amount of brazing filler metal powder and thickening agent | | | | | Composition and amount of aqueous solution | | | | | Viscosity of paste brazing filler metal (dPa·s) | Precipitation of BFMP |
|---|---|---|---|---|---|---|---|---|---|---|---|---|
| | Brazing filler metal powder (BFMP) | | Thickening agent (TA) | | Total of BFMP and TA (by mass) | Water | Organic solvent | | Other additives | | | |
| | Particle Size | Amount (by mass) | Name | Amount (by mass) | | Amount (by mass) | Name | Amount (by mass) | Name | Amount (by mass) | | |
| Ex. No.1 | -150µm | 99.67 | methyl cellulose | 0.33 | 100.00 | 8.70 | - | 0 | - | 0 | 1100 | No |
| Ex. No.2 | -106µm | 97.97 | carboxymethyl cellulose | 2.03 | 100.00 | 26.58 | - | 0 | - | 0 | 380 | No |
| Ex. No.3 | -250µm | 99.43 | methyl cellulose | 0.57 | 100.00 | 8.49 | ethyl alcohol | 4.76 | - | 0 | 1380 | No |
| Ex. No.4 | -45µm | 99.84 | carboxymethyl cellulose | 0.16 | 100.00 | 3.10 | ethylene glycol | 7.76 | - | 0 | 370 | No |
| Ex. No.5 | -63µm | 99.61 | hydroxypropyl cellulose | 0.39 | 100.00 | 11.89 | acetone isopropyl alcohol | 0.68 0.68 | - | 0 | 380 | No |
| Ex. No.6 | -150µm | 99.40 | methyl cellulose | 0.36 | 100.00 | 15.48 | ethyl alcohol Po | 1.79 | - | 0 | 150 | No |
| | | | carboxymethyl cellulose | 0.24 | | | ethylene glycol | 1.79 | | | | |
| Ex. No.7 | -63µm | 99.53 | methyl cellulose hydroxypropyl cellulose | 0.47 | 100.00 | 11.81 | isopropyl alcohol | 0.67 | - | 0 | 360 | No |
| Ex. No.8 | -150µm | 99.44 | methyl cellulose | 0.34 | 100.00 | 11.13 | - | 0 | polyvinyl alcohol | 0.13 | 520 | No |
| | | | carboxymethyl cellulose | 0.22 | | | | | | | | |
| Ex. No.9 | -150µm | 99.73 | carboxymethyl cellulose | 0.27 | 100.00 | 7.68 | acetone | 1.10 | urethane resin | 0.88 | 400 | No |
| EX. No. 10 | -63µm | 99.60 | hydroxypropyl cellulose | 0.40 | 100.00 | 8.87 | isopropyl alcohol | 4.66 | acrylic resin | 0.17 | 320 | No |
| Ex. No. 11 | -106µm | 98.90 | carboxymethyl cellulose | 0.93 | 100.00 | 12.75 | methyl alcohol | 2.90 | vinyl acetate | 0.29 | 820 | No |
| | | | hydroxypropyl cellulose | 0.17 | | | | | | | | |
| Co. Ex. No. 12 | -106µm | 99.90 | methyl cellulose | 0.10 | 100.00 | 10.13 | - | 0 | - | 0 | < 100 | Yes |
| Co. Ex. No. 13 | -45µm | 97.58 | carboxymethyl cellulose | 2.42 | 100.00 | 19.32 | acetone | 1.45 | - | 0 | 1720 | No |
| Co. Ex. No.14 | -150µm | 99.67 | carboxymethyl cellulose | 0.22 | 100.00 | 2.56 | ethyl alcohol | 1.33 | | 0 | 1850 | No |
| | | | hydroxypropyl cellulose | 0.11 | | | ethylene glycol | 7.22 | | | | |
| Co. Ex. No.15 | -300µm | 99.42 | methyl cellulose | 0.12 | 100.00 | 13.90 | methyl alcohol | 0.58 | vinyl acetate | 1.39 | 120 | Yes |
| | | | hydroxypropyl cellulose | 0.46 | | | | | | | | |

| | | | | | | | | | | | | |
|---|---|---|---|---|---|---|---|---|---|---|---|---|
| Remarks The brazing filler metal powder was Ni-29Cr-6P-4Si (mass%) | | | | | | | | | | | | |

Examples No. 1 to No. 11 had paste viscosities in the range of 100 to 1500 dPa · s, and no precipitation of brazing filler metal powder were observed. On the other hand, in Comparative Example No. 12, the amount of thickening agent was less than 0.12 parts by mass. In Comparative Example No. 13, the amount of thickening agent exceeded 2.10 parts by mass. In Comparative Example No. 14, the amount of organic solvent exceeded 7.8 parts by mass. In Comparative Example No. 15, the amount of vinyl acetate exceeded 1.0 parts by mass. And in the comparative examples, either the viscosity of the paste deviated from the target range of 100 to 1500 dPa · s, or precipitation of the brazing filler metal powder was observed. No mamako was observed in all of the example and comparative example pastes prepared using the present invention.

In addition, the manufacturing procedure of the present invention was used to evaluate the suppression of mamako formation and the number of days required to produce the paste brazing filler metal. The results are shown in Table 2.

**[Tabel 2]**

| | Powder for paste brazing filler metal Process I | Manufacturing proces for paste | | | | Number of days for production | Observation of mamako | | Viscosity of paste brazing filler metal (dPa·s) | Whether or not paste brazing filler metal can be used |
|---|---|---|---|---|---|---|---|---|---|---|
| | | Binder production (process II) | days | Paste production (process III) | days | | when | yes/no | | |
| Ex. No.A | Homogeneous mixture of BFMP and TA (Mixed powder) | No | 0 | Inserting the powder from Process I into the kneader and knead it for 30 minutes after adding water | 1 | 1 | No | No | 380 | possible |
| Co. Ex. No.B | TA on top of BFMP | No | 0 | Inserting the powder from Process I into the kneader and knead it for 30 minutes after adding water | 1 | 1 | Process III during paste production | Yes | not measurable | not |
| Co. Ex. No.C | BFMP | mixing water and carboxymethyl cellulose for 3 hours using a stirrer, and disperse for 1.5 days | 2 | Inserting the powder from Process I and the dispersion from Process II into the kneader and knead it for 30 minutes | 1 | 3 | No | No | 420 | possible |
| Co. Ex. No.D | BFMP | mixing water and carboxymethyl cellulose for 30 minutes using a stirrer, disperse for 5 days, and stir again for 30 minutes | 6 | Inserting the powder from Process I and the dispersion from Process II into the kneader and knead it for 30 minutes | 1 | 7 | Process II during binder production | Yes | 390 | possible |
| Remarks | A production comparison was made using the ingredients of Ex. No.2 in Table 1. The number of days was calculated in units of 1 day. | | | | | | | | | |

Example No. A shows a breakdown of the production of Example No. 2 in Table 1. In addition to the production and preparation of mixed powder for the paste brazing filler metal (Process I), one day was required for the paste production process (Processes II and III).

On the other hand, in the case of Comparative Example No. B, which has the same component as Example No. 2 and adds a thickening agent to the powder for the paste brazing filler metal without mixing, the number of days required for the paste manufacturing process (total of Process II and Process III) was one day, as in Example A. However, during Process III of the paste production, mamako was generated and the paste could not be used as a paste brazing filler metal. Comparative Examples No. C and No. D are general paste brazing filler metal manufacturing processes. Comparative Example No. C, which was stirred for a long time in Process II of binder manufacturing, took a total of 3 days for the paste manufacturing process (total of Process II and Process III), which was longer than the present invention. Furthermore, the viscosity of the paste brazing filler metal tended to increase as the moisture in the binder volatilized in Process II and the viscosity of the binder increased, it was confirmed that the paste viscosity was not stable. Therefore, Comparative Example No. D, in which short stirring time was used to suppress moisture volatilization in Process II of binder production. But mamako was observed in Process II of binder production, and it took 5 days to disperse the mamako. The viscosity of the paste brazing filler metal was equivalent to that of Example No. A, but the total number of days required for the paste manufacturing process (total of Process II and Process III) was 7 days, which was a long time.

In other words, the present method of manufacturing the paste brazing filler metal is more effective than the current method of manufacturing the paste brazing filler metal in terms of generation of mamako, production time, and viscosity stability of paste brazing.

### [Industrial Availability]

As described above, the mixed powder for the paste brazing filler metal and the paste brazing filler metal using the mixed powder for the paste brazing filler metal have a viscosity suitable for applying the paste brazing filler metal, and no precipitation of the brazing filler metal powder occurs, thus producing a paste brazing filler metal with excellent workability for application. In addition, it is expected to be a new method of making the paste brazing filler metal that can simplify the binder manufacturing process in the production of the paste brazing filler metal.

## Claims

1. A mixed powder for a paste brazing filler metal including,
a brazing filler metal powder and
a resin powder of a water-soluble thickening agent,
wherein a mass ratio of the brazing filler metal powder to the resin powder is 99.88 to 97.90: 0.12 to 2.10.

2. The mixed powder for the paste brazing filler metal according to Claim 1, wherein,
the brazing filler metal powder is an alloy powder produced by an atomization method with nickel, iron, or cobalt as a main component.

3. The mixed powder for the paste brazing filler metal according to Claim 1 or 2, wherein,
the resin powder is cellulose based.

4. The mixed powder for the paste brazing filler metal according to Claim 1 or 2, wherein,
the resin powder is one or two selected from methyl cellulose, carboxymethyl cellulose, hydroxyethyl cellulose, hydroxypropyl cellulose, and hydroxypropylmethyl cellulose.

5. The mixed powder for the paste brazing filler metal according to Claim 1 or 2, wherein,
a particle size of the brazing filler metal powder is 250 µm or less.

6. The paste brazing filler metal combining 8.0 to 26.6 parts by mass of water with 100 parts by mass of the mixed powder for the paste brazing filler metal according to claim 1 or 2.

7. The paste brazing filler metal including 7.8 or less parts by mass of an organic solvent (except when a total of the organic solvent is 0 parts by mass) and 2.0 to 20.0 parts by mass of water for 100 parts by mass of the mixed powder for the paste brazing filler metal according to claim 1 or 2, wherein the organic solvent is 1 to 3 selected from acetone, methyl alcohol, ethyl alcohol, n-propyl alcohol, isopropyl alcohol, ethylene glycol, and glycerin,
wherein a total of the water and the organic solvent is 8.0 to 22.0 parts by mass.

8. The paste brazing filler metal including 1.0 or less parts by mass of a water-soluble resin (except when a total of the water-soluble resin is 0 parts by mass) for 100 parts by mass of the mixed powder for the paste brazing filler metal according to claim 1 or 2,
wherein the water-soluble resin is one or two selected from polyvinyl alcohol, urethane resin, acrylic resin, and vinyl acetate,
wherein a remainder is water,
wherein a total of the water and the water-soluble resin is 8.0 to 22.0 parts by mass.

9. The paste brazing filler metal including 7.8 or less parts by mass of an organic solvent (except when a total of the organic solvent is 0 parts by mass), 1.0 or less parts by mass of a water-soluble resin (except when a total of the water-soluble resin is 0 parts by mass) for 100 parts by mass of the mixed powder for the paste brazing filler metal according to claim 1 or 2,
wherein the organic solvent is 1 to 3 selected from acetone, methyl alcohol, ethyl alcohol, n-propyl alcohol, isopropyl alcohol, ethylene glycol, and glycerin,
wherein the water-soluble resin is one or two selected from polyvinyl alcohol, urethane resin, acrylic resin, and vinyl acetate,
wherein a remainder is water,
wherein a total of the water, the organic solvent and the water-soluble resin is 8.0 to 22.0 parts by mass.

10. A manufacturing method for the paste brazing filler metal, comprises a process of mixing 8.0 to 26.6 parts by mass of water with 100 parts by mass of the mixed powder for the paste brazing filler metal according to claim 1 or 2.

11. A manufacturing method for the paste brazing filler metal, comprises a process of mixing 7.8 or less parts by mass of an organic solvent (except when a total of the organic solvent is 0 parts by mass) and 2.0 to 20.0 parts by mass of water with 100 parts by mass of the mixed powder for the paste brazing filler metal according to claim 1 or 2,
wherein the organic solvent is 1 to 3 selected from acetone, methyl alcohol, ethyl alcohol, n-propyl alcohol, isopropyl alcohol, ethylene glycol, and glycerin,
wherein a total of the water and the organic solvent is 8.0 to 22.0 parts by mass.

12. A manufacturing method for the paste brazing filler metal, comprises a process of mixing 1.0 or less parts by mass of a water-soluble resin (except when a total of the water-soluble resin is 0 parts by mass) and a water with 100 parts by mass of the mixed powder for the paste brazing filler metal according to claim 1 or 2,
wherein the water-soluble resin is one or two selected from polyvinyl alcohol, urethane resin, acrylic resin, and vinyl acetate,
wherein a total of the water and the water-soluble resin is 8.0 to 22.0 parts by mass.

13. A manufacturing method for the paste brazing filler metal, comprises a process of mixing 7.8 or less parts by mass of an organic solvent (except when a total of the organic solvent is 0 parts by mass), 1.0 or less parts by mass of a water-soluble resin (except when a total of the water-soluble resin is 0 parts by mass), and water with 100 parts by mass of the mixed powder for the paste brazing filler metal according to claim 1 or 2,
wherein the organic solvent is 1 to 3 selected from acetone, methyl alcohol, ethyl alcohol, n-propyl alcohol, isopropyl alcohol, ethylene glycol, and glycerin,
wherein the water-soluble resin is one or two selected from polyvinyl alcohol, urethane resin, acrylic resin, and vinyl acetate,
wherein a total of the water, the organic solvent and the water-soluble resin is 8.0 to 22.0 parts by mass.
